(19) Europäisches Patentamt
European Patent Office
Office européen des brevets

(11) **EP 2 066 057 A2**

(12) **EUROPEAN PATENT APPLICATION**

(43) Date of publication:
**03.06.2009 Bulletin 2009/23**

(51) Int Cl.:
**H04L 1/00** $^{(2006.01)}$

(21) Application number: **08019542.3**

(22) Date of filing: **07.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.11.2007 JP 2007307894**

(71) Applicant: **CANON KABUSHIKI KAISHA**
**Tokyo (JP)**

(72) Inventor: **Nago, Hidetada**
**Tokyo (JP)**

(74) Representative: **Weser, Wolfgang et al**
**Weser & Kollegen**
**Patentanwälte**
**Radeckestrasse 43**
**81245 München (DE)**

(54) **Communication apparatus and controlling method thereof**

(57) To determine an appropriate transmission rate more efficiently in communication which uses multiple-input multiple-output technique, a communication apparatus (100) which selects one of a plurality of transmission rates determined by a set of modulation schemes for streams and communicates with an external device using the MIMO technique of performing transmission using a plurality of streams (ST1, ST2, ST3) includes a change means (106, S304) which changes the transmission rate, and a determination means (106, S307) which determines, based on a transmission power to be allocated to each stream and the modulation scheme of each stream, the transmission rate to be changed by the change means so as to make the power per bit of each stream at the transmission rate after change remain unchanged or increase.

**F I G. 2**

EP 2 066 057 A2

**Description**

BACKGROUND OF THE INVENTION

Field of the Invention

The present invention relates to a determination of transmission rate in communication using a MIMO (Multiple-Input Multiple-Output) technique.

Description of the Related Art

A plurality of transmission rates is defined for a wireless LAN complying with the IEEE802.11 series standard. One of the transmission rates is selectively used based on the presence/absence of an error and the received signal intensity. Techniques such as IEEE802.11n using MIMO have been used recently, which implement high-speed transmission by transmitting a plurality of streams to a partner device. For example, Japanese Patent Laid-Open No. 2005-175542 discloses a method of determining the transmission mode in a communication apparatus based on IEEE802.11n.

However, the plurality of streams of MIMO do not necessarily adopt the same transmission power and modulation scheme. In some cases, the power per bit may be different between the streams. For this reason, even when the transmission rate is changed to a lower one due to a poorer communication condition, the situation may be worse when the power per bit is considered. In the conventional transmission rate changing method, the transmission rate sometimes needs to be determined again. That is, a time is required until determination of a transmission rate that allows stable communication.

The present invention has been made in consideration of the above-described problem, and provides a technique of enabling to more quickly determine an appropriate transmission rate in communication using the MIMO technique.

SUMMARY OF THE INVENTION

The present invention in its first aspect provides a communication apparatus as specified in claims 1 to 5.

The present invention in its second aspect provides a controlling method of a communication apparatus as specified in claims 6 to 10.

According to the present invention, it is possible to provide a technique that enables more efficient determination of an appropriate transmission rate in communication, using the MIMO technique.

Further features of the present invention will become apparent from the following description of exemplary embodiments with reference to the attached drawings.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a block diagram showing the internal arrangement of a communication apparatus according to the first embodiment;

Fig. 2 is a flowchart of transmission rate selection of the communication apparatus according to the first embodiment;

Fig. 3 is a view showing an example of a table (two streams);

Fig. 4 is a view showing another example of a table (three streams); and

Fig. 5 is a flowchart of transmission rate selection of a communication apparatus according to the second embodiment.

DESCRIPTION OF THE EMBODIMENTS

Preferred embodiments of the present invention will now be described in detail with reference to the accompanying drawings. Note that the following embodiments are not intended to limit the scope of the invention but are merely examples.

(First Embodiment) As a communication apparatus according to the first embodiment of the present invention, a communication apparatus complying with the IEEE802.11e standard will be exemplified below. Note that OFDM-MIMO is used in the IEEE802.11e standard.

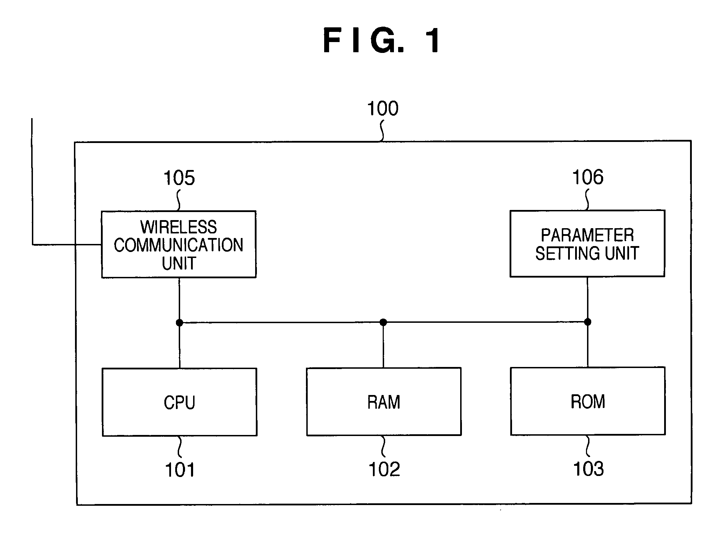

<Apparatus Arrangement> Fig. 1 is a block diagram showing the internal arrangement of a communication apparatus according to the first embodiment.

Reference numeral 101 denotes a central processing unit (CPU); 102, a RAM; 103, a ROM; 105, a wireless communication unit; and 106, a parameter setting unit.

The CPU 101 controls the units of a communication apparatus 100 by executing control programs stored in the ROM 103. The RAM 102 is used to temporarily store communication parameters to be described later and also serves as the work memory of the CPU 101.

The parameter setting unit 106 is a functional unit for setting communication parameters, and sets communication parameters determined by the CPU 101 or communication parameters input by the user via an external setting unit (not shown).

The wireless communication unit 105 is a functional unit which performs wireless communication with another wireless communication apparatus (a station in general). The wireless communication unit 105 operates based on the communication parameters set by the parameter setting unit 106.

<Relative Power Per Bit of Each Stream> The following description will be made assuming that one of QPSK, 16QAM, and 64QAM is used as the primary modulation scheme of each stream used in MIMO. However, the embodiment is applicable to any other modulation scheme.

The power per bit in each modulation scheme, when assigning data to each subcarrier is examined below. When QPSK, 16QAM, or 64QAM is used as the modulation scheme, the number of transmission bits per symbol in each subcarrier is

QPSK: 2 bits

16QAM: 4 bits

64QAM: 6 bits Let m be the number of data subcarriers in one stream. The number of transmission bits per symbol in the stream is 2m (bits), 4m (bits), or 6m (bits).

Subcarriers include pilot subcarriers for signal correction as well as those assigned to data. When the number of pilot subcarriers is four, the power per bit data in each modulation scheme is

$$\text{QPSK:} \quad (m/(m + 4)) \cdot P/2m \qquad \qquad \ldots(1)$$

$$\text{16QAM:} \quad (m/(m + 4)) \cdot P/4m \qquad \qquad \ldots(2)$$

$$\text{64QAM:} \quad (m/(m + 4)) \cdot P/6m \qquad \qquad \ldots(3)$$

where P (W) is the power of a stream. The gain by convolution coding is taken into consideration. Letting "a/b" be the convolution coding rate, the power per bit is

$$\text{QPSK:} \quad ((m/(m + 4)) \cdot P/2m) \cdot b/a \qquad \qquad \ldots(4)$$

$$\text{16QAM:} \quad ((m/(m + 4)) \cdot P/4m) \cdot b/a \qquad \qquad \ldots(5)$$

$$\text{64QAM:} \quad ((m/(m + 4)) \cdot P/6m) \cdot b/a \qquad \qquad \ldots(6)$$

In IEEE802.11n, the modulation scheme and transmission power can change between a plurality of streams. However, they use the same number of subcarriers and the same convolution coding rate. Hence, when common elements are removed from expressions (4), (5), and (6), the relative power per bit is obtained as

$$QPSK: P \qquad \ldots(7)$$

$$16QAM: P/2 \qquad \ldots(8)$$

$$64QAM: P/3 \qquad \ldots(9)$$

This allows determination of stream with the smaller power.

Next, the power ratio between the transmission rates is obtained using expressions (4), (5), and (6). Since the number of subcarriers and transmission power are the same although the transmission rate changes,

$$QPSK: b/2a \qquad \ldots(4')$$

$$16QAM: b/4a \qquad \ldots(5')$$

$$64QAM: b/6a \qquad \ldots(6')$$

For convolution coding rates of 1/2 and 3/4, we obtain

| Coding rate | 1/2 | 3/4 |
|---|---|---|
| QPSK: | 1.00 | 0.66 |
| 16QAM: | 0.50 | 0.33 |
| 64QAM: | 0.33 | 0.22 |

It is possible to determine by comparing the numerical values whether the power of the stream will be lower.

In IEEE802.11n, the sum of powers used by the plurality of streams in use has a constant value. Assume that two streams are used. Letting P1 and P2 be the power ratios assigned to them, the sum of powers is

$$P1 + P2 = 1.0$$

Assume that three streams are used. Letting P1, P2, and P3 be the power ratios assigned to them, the sum of powers is

$$P1 + P2 + P3 = 1.0$$

<Operation of Apparatus>

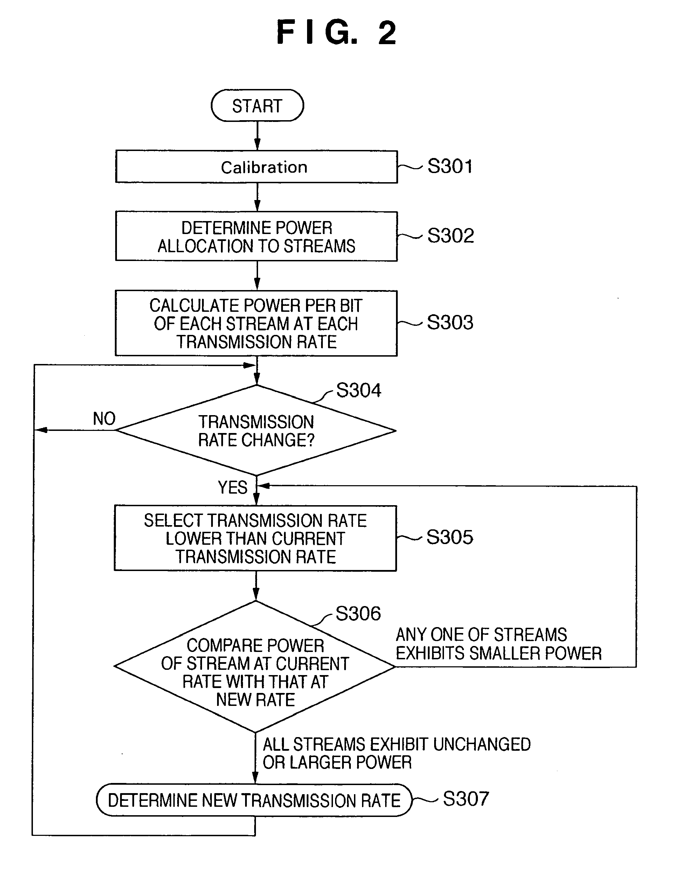

Two Streams (2-Input 2-Output) Fig. 2 is a flowchart of transmission rate selection of the communication apparatus according to the first embodiment. Note that the following sequence is implemented by causing the CPU 101 in the communication apparatus 100 to execute a transmission rate determination program stored in the ROM 103.

In step S301, calibration is performed to check the state of communication with an external communication apparatus which is currently communicating or is going to communicate.

In step S302, power is allocated to each stream based on the calibration result in step S301. For example, 60% of power is allocated to a stream ST1, and 40% is allocated to a stream ST2.

In step S303, the relative power per bit of each stream at each transmission rate is derived based on the power allocation determined in step S302. More specifically, the relative power per bit of each stream is derived from expressions (7), (8), and (9) described above based on the power allocation to the streams and the plurality of available modulation schemes. The result is stored in the RAM 102 as a table. When the power allocation determined in step S302 is changed, the table is updated.

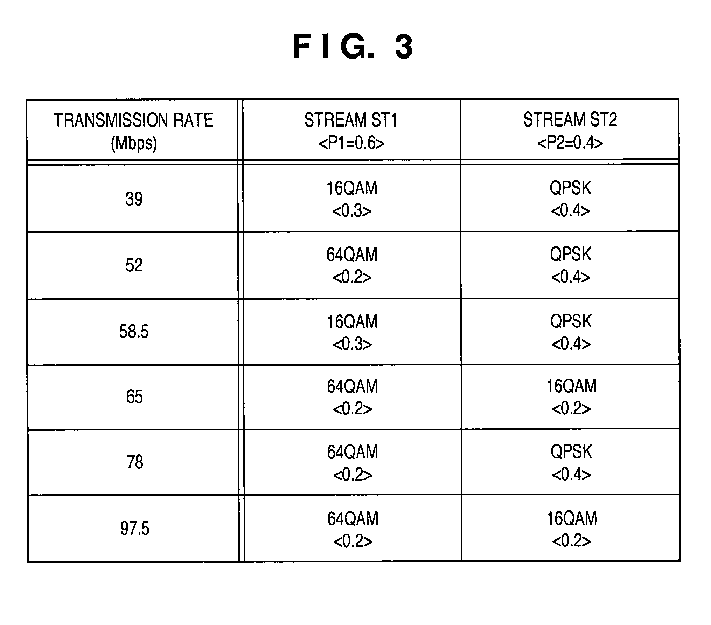

Fig. 3 is a view showing an example of the table generated in step S303.

For example, if the stream ST1 is modulated by 16QAM, the relative power per bit is 1/2 of the power (= 0.6) of the stream ST1 based on expression (8), i.e., "0.3". If the stream ST2 is modulated by 16QAM, the relative power per bit is 1/2 of the power (= 0.4) of the stream ST2, i.e., "0.2". Fig. 3 shows the relative power per bit in <> below each modulation scheme.

In step S304, it is determined whether transmission rate change is necessary. More specifically, when the error rate or the number of times of retransmission per unit time exceeds a threshold value designated in advance, it is determined that transmission rate change is necessary. If it is determined that transmission rate change is necessary, the process advances to step S305.

In step S305, a transmission rate lower than the current transmission rate by one step is selected. For example, if the current transmission rate is "78 Mbps", "65 Mbps" is selected first.

In step S306, the relative power per bit of each stream for the current transmission rate is compared with that for the transmission rate selected in step S305. If any one of the streams exhibits a decrease in the relative power per bit, the transmission rate is determined to be inappropriate. The process returns to step S305. On the other hand, if it is determined that the relative power per bit remains unchanged or increases for all streams, the process advances to step S307.

For example, the relative powers per bit of the "stream ST1" at the current transmission rate "78 Mbps" and the selected transmission rate "65 Mbps" are

78 Mbps: 0.22

65 Mbps: 0.33 The relative powers per bit of the "stream ST2" at the current transmission rate "78 Mbps" and the selected transmission rate "65 Mbps" are

78 Mbps: 0.66

65 Mbps: 0.50 That is, the relative power per bit lowers in the stream ST2. It is therefore determined that the transmission rate "65 Mbps" is inappropriate. In step S305, a transmission rate lower by one more step, i.e., "58.5 Mbps" is selected. Since the relative power per bit at the transmission rate "58.5 Mbps" remains unchanged or increases for both the streams ST1 and ST2, the process advances to step S307.

In step S307, the transmission rate selected in step S306 is determined as the transmission rate after change. A modulation scheme corresponding to the selected transmission rate is set for the wireless communication unit 105.

Determining the transmission rate after change in the above-described way always enables stable communication as compared to the transmission rate before change.

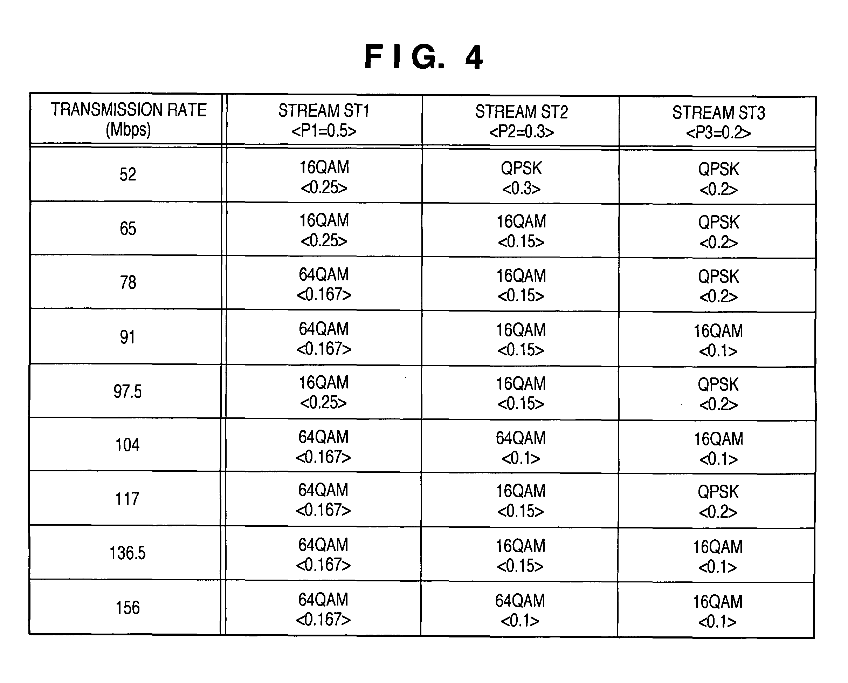

. Three Streams (3-Input 3-Output) The processing for three streams is almost the same as that for two streams described above. This will be described again with reference to Fig. 2. In this case, however, a table as shown in Fig. 4 is generated, as will be described later.

In step S301, calibration is performed to check the state of communication with an external communication apparatus which is currently communicating or is going to communicate.

In step S302, power is allocated to each stream based on the calibration result in step S301. For example, 50% of power is allocated to the stream ST1, 30% is allocated to the stream ST2, and 20% is allocated to a stream ST3.

In step S303, the relative power per bit of each stream at each transmission rate is derived based on the power allocation determined in step S302. More specifically, the relative power per bit of each stream is derived based on the power allocation to the streams and expressions (7), (8), and (9) described above. The result is stored in the RAM 102 as a table.

Fig. 4 is a view showing an example of the table generated in step S303.

For example, if the stream ST1 is modulated by 16QAM, the relative power per bit is 1/2 of the power (= 0.5) of the stream ST1 based on expression (8), i.e., "0.25". If the stream ST2 is modulated by 16QAM, the relative power per bit is 1/2 of the power (= 0.3) of the stream ST2, i.e., "0.15". Fig. 4 shows the relative power per bit in <> below each modulation scheme.

In step S304, it is determined whether transmission rate change is necessary. More specifically, when the error rate or the number of times of retransmission per unit time exceeds a threshold value designated in advance, it is determined that transmission rate change is necessary. If it is determined that transmission rate change is necessary, the process advances to step S305.

In step S305, a transmission rate lower than the current transmission rate by one step is selected. For example, if the current transmission rate is "136.5 Mbps", "117 Mbps" is selected first.

In step S306, the relative power per bit of each stream for the current transmission rate is compared with that for the transmission rate selected in step S305. If any one of the streams exhibits a decrease in the relative power per bit, the transmission rate is determined to be inappropriate. The process returns to step S305. On the other hand, if it is determined that the relative power per bit remains unchanged or increases for all streams, the process advances to step S307. Since the relative power per bit at the transmission rate "117 Mbps" remains unchanged or increases for all the streams ST1 to ST3, the process advances to step S307.

In step S307, the transmission rate selected in step S306 is determined as the transmission rate after change. A modulation scheme corresponding to the selected transmission rate is set for the wireless communication unit 105.

Determining the transmission rate after change in the above-described way always enables stable communication as compared to the transmission rate before change.

An example for IEEE802.11n has been described above. However, the embodiment is applicable even when the modulation scheme, convolution coding rate, number of subcarriers, and transmission power change between streams in OFDM-MIMO. In this case, the relative power per bit is derived using expressions (4) to (6).

In the above description, a table is generated after determining the power allocation to each stream, and a transmission rate is selected. However, tables may be generated in advance in correspondence with several power allocations and stored in the ROM 103.

(Second Embodiment) In the second embodiment, a method of more efficiently determining a transmission rate after change in changing the transmission rate. The apparatus arrangement (Fig. 1) and usable transmission rates (Figs. 2 and 3) are the same as in the first embodiment, and a description thereof will not be repeated.

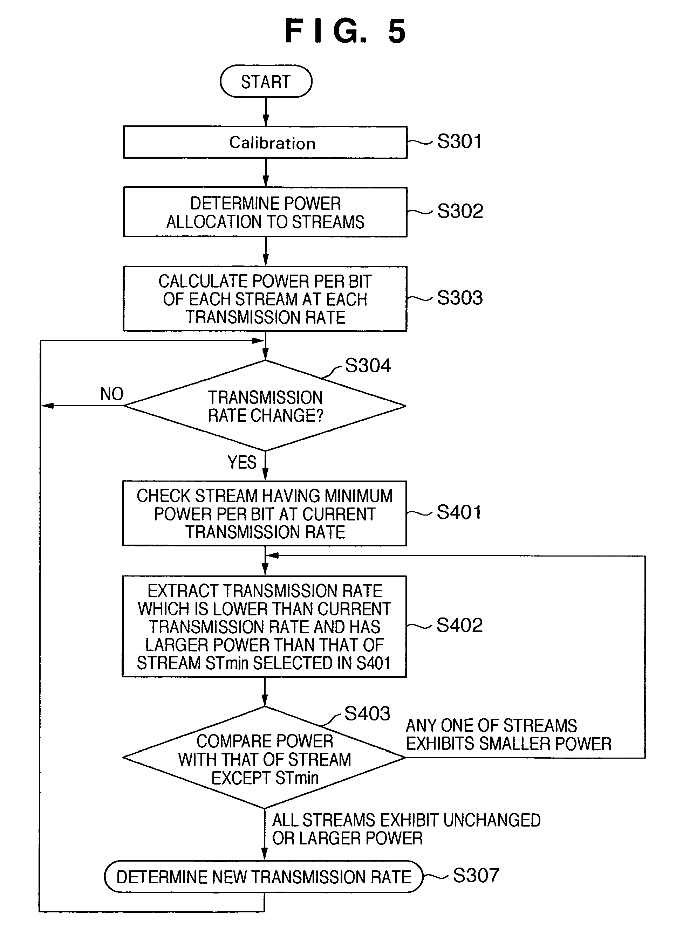

<Operation of Apparatus> Two Streams (2-Input 2-Output) Fig. 5 is a flowchart of transmission rate selection of the communication apparatus according to the second embodiment. Note that the following sequence is implemented by causing a CPU 101 in a communication apparatus 100 to execute a transmission rate determination program stored in a ROM 103.

In step S301, calibration is performed to check the state of communication with an external communication apparatus which is currently communicating or is going to communicate.

In step S302, power is allocated to each stream based on the calibration result in step S301. For example, 60% of power is allocated to a stream ST1, and 40% is allocated to a stream ST2.

In step S303, the relative power per bit of each stream at each transmission rate is derived based on the power allocation determined in step S302. More specifically, the relative power per bit of each stream is derived based on the power allocation to the streams and expressions (7), (8), and (9) described above. The result is stored in the RAM 102 as a table.

In step S304, it is determined whether transmission rate change is necessary. More specifically, when the error rate or the number of times of retransmission per unit time exceeds a threshold value designated in advance, it is determined that transmission rate change is necessary. If it is determined that transmission rate change is necessary, the process advances to step S401.

A stream which has caused an error during transmission has a minimum relative power per bit at a high probability. Hence, in step S401, out of the current streams, a stream having the minimum relative power per bit is determined. The stream with the minimum relative power per bit will be called a stream STmin. When the current transmission rate is "78 Mbps", the stream ST1 is determined as the stream STmin.

In step S402, referring to a table, transmission rates each of which is lower than the current transmission rate and has a relative power larger than that of STmin determined in step S401 as the relative power of the same stream as the stream STmin are extracted. In this example, transmission rates each having a relative power per bit larger than 0.2 are extracted. That is, "58.8 Mbps" and "39 Mbps" are extracted. The transmission rates each having a relative power larger than that of STmin are extracted here due to the following reason. At a relative power equal to or smaller than that of STmin, there is little possibility of improving the error occurrence in the same stream during transmission even at a lower transmission rate. That is, the error occurrence during transmission is improved at a high possibility by extracting transmission rates each having a relative power larger than that of STmin.

In step S403, the relative power per bit for one of the transmission rates extracted in step S402 is compared with those of streams except the stream STmin. This comparison is done in descending order of transmission rates extracted in step S402 to determine a transmission rate as high as possible as a new transmission rate. If any one of the streams exhibits a decrease in the relative power per bit, the transmission rate is determined to be inappropriate. The process returns to step S402. On the other hand, if it is determined that the relative power per bit remains unchanged or increases for all streams, the process advances to step S307. In this example, the relative power per bit is compared for a stream except the stream STmin (ST1), i.e., the stream ST2. Since the relative power is 0.4 at both "78 Mbps" and "58.5 Mbps", "58.5 Mbps" is determined to be appropriate.

In step S307, the transmission rate selected in step S403 is determined as the transmission rate after change. A modulation scheme corresponding to the selected transmission rate is set for a wireless communication unit 105.

Determining the transmission rate after change in the above-described way always enables stable communication as compared to the transmission rate before change.

Three Streams (3-Input 3-Output) In step S301, calibration is performed to check the state of communication with an external communication apparatus which is currently communicating or is going to communicate.

In step S302, power is allocated to each stream based on the calibration result in step S301. For example, 50% of power is allocated to the stream ST1, 30% is allocated to the stream ST2, and 20% is allocated to a stream ST3.

In step S303, the relative power per bit of each stream at each transmission rate is derived based on the power allocation determined in step S302. More specifically, the relative power per bit of each stream is derived based on the power allocation to the streams and expressions (7), (8), and (9) described above. The result is stored in the RAM 102 as a table.

In step S304, it is determined whether transmission rate change is necessary. More specifically, when the error rate or the number of times of retransmission per unit time exceeds a threshold value designated in advance, it is determined that transmission rate change is necessary. If it is determined that transmission rate change is necessary, the process advances to step S401.

A stream with an error occurred during transmission has a minimum relative power per bit at a high probability. Hence, in step S401, out of the current streams, a stream having the minimum relative power per bit is determined. The stream with the minimum relative power per bit will be called the stream STmin. When the current transmission rate is "156 Mbps", the streams ST2 and ST3 are determined as the stream STmin.

In step S402, referring to a table, a transmission rate which is lower than the current transmission rate and has a relative power larger than that of STmin determined in step S401 is extracted. In this example, transmission rates each having a relative power per bit larger than 0.1 are extracted. That is, "52 Mbps", "65 Mbps", "78 Mbps", "97.5 Mbps", and "117 Mbps" are extracted. The transmission rates each having a relative power larger than that of STmin are extracted here due to the following reason. At a relative power equal to or smaller than that of STmin, there is little possibility of improving the error occurrence in the same stream during transmission even at a lower transmission rate. That is, the error occurrence during transmission is improved at a high possibility by extracting transmission rates each having a relative power larger than that of STmin.

In step S403, the relative power per bit for one of the transmission rates extracted in step S402 is compared with those of streams except the stream STmin. This comparison is done in descending order of transmission rates extracted in step S402 to determine a transmission rate as high as possible as a new transmission rate. If any one of the streams exhibits a decrease in the relative power per bit, the transmission rate is determined to be inappropriate. The process returns to step S402. On the other hand, if it is determined that the relative power per bit remains unchanged or increases for all streams, the process advances to step S307. In this example, the relative power per bit is compared for a stream except the stream STmin (ST2 and ST3), i.e., the stream ST1. Since the relative power is 0.167 at both "156 Mbps" and "117 Mbps", "117 Mbps" is determined to be appropriate.

In step S307, the transmission rate selected in step S403 is determined as the transmission rate after change. A modulation scheme corresponding to the selected transmission rate is set for a wireless communication unit 105.

The above-described selection enables more efficient selection as compared to the first embodiment.

In the first and second embodiments described above, relative powers "per bit" of the respective streams are obtained and compared. However, relative powers not "per bit" but "per predetermined number of bits" may be obtained and compared. A transmission rate having an unchanged or larger relative power per bit is determined as the transmission rate after change. However, a transmission rate having a larger relative power per bit may be determined as the transmission rate after change. In this case, the error occurrence rate decreases as compared to the case that a transmission rate having an unchanged relative power is selected. Hence, the possibility of transmission rate re-selection becomes lower.

(Other Embodiments) The embodiments of the present invention have been described above in detail. The present invention is applicable to a system including a plurality of devices or an apparatus including a single device.

The present invention is also achieved even by supplying a program which implements the functions of the above-described embodiments to the system or apparatus directly or from a remote site and causing the system or apparatus to read out and execute the supplied program code. Hence, the program code itself, which is installed in a computer to implement the functional processing of the present invention by the computer, is also incorporated in the technical scope of the present invention.

In this case, the program can take any form such as an object code, a program to be executed by an interpreter, or script data to be supplied to the OS as long as the functions of the program can be obtained.

Examples of the recording medium to supply the program are a floppy® disk, hard disk, optical disk (CD, DVD), magnetooptical disk, magnetic tape, nonvolatile memory card, and ROM.

The functions of the above-described embodiments are implemented when the computer executes the readout program. The functions of the above-described embodiments are also implemented when, e.g., the OS running on the computer partially or wholly executes actual processing based on the instructions of the program.

Alternatively, the program read out from the recording medium is written in the memory of a function expansion board inserted into the computer or a function expansion unit connected to the computer. Then, the CPU of the function expansion board or function expansion unit partially or wholly executes actual processing based on the instructions of the program, thereby implementing the functions of the above-described embodiments.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A communication apparatus (100) which communicates with an external device by a multiple-input multiple-output technique of performing transmission using a plurality of streams (ST1, ST2, ST3), the apparatus comprising:

   a change means (106, S304) which changes the transmission rate; and
   a determination means (106, S307) which determines, based on a transmission power to be allocated to each stream and the modulation scheme of each stream, the transmission rate to be changed by said change means so as to make a power per bit of each stream at the transmission rate after change remain unchanged or increase.

2. The apparatus according to claim 1, further comprising a generation means which generates, based on the transmission power to be allocated to each stream and the modulation scheme of each stream, a table comprising information about the transmission rate and the power per bit of each stream.

3. The apparatus according to claim 1, wherein said determination means extracts, out of a plurality of sets of modulation schemes, sets of modulation schemes corresponding to a transmission rate which is lower than the transmission rate before change and has a power larger than a minimum power of each stream before change, and selects, from the extracted sets of modulation schemes, a set of modulation schemes in which the power per bit after change is not less than the power per bit before change for each stream.

4. The apparatus according to claim 2, wherein said generation means updates the table when the transmission power to be allocated to each stream is updated.

5. The apparatus according to claim 1, further comprising a setting means which sets the transmission power to be allocated to each stream by executing calibration for the external device.

6. A controlling method of a communication apparatus (100) which communicates with an external device by a multiple-input multiple-output technique of performing transmission using a plurality of streams (ST1, ST2, ST3), the method comprising the step of:

   when changing (106, S304) the transmission rate, determining (106, S307), based on a transmission power to be allocated to each stream and the modulation scheme of each stream, the transmission rate to be changed so as to make a power per bit of each stream at the transmission rate after change remain unchanged or increase.

7. The method according to claim 6, further comprising the step of generating, based on the transmission power to be allocated to each stream and the modulation scheme of each stream, a table comprising information about the transmission rate and the power per bit of each stream.

8. The method according to claim 6, wherein in the step of determining the transmission rate, sets of modulation schemes corresponding to a transmission rate which is lower than the transmission rate before change and has a power larger than a minimum power of each stream before change is extracted out of a plurality of sets of modulation schemes, and a set of modulation schemes in which the power per bit after change is not less than the power per bit before change for each stream is selected from the extracted sets of modulation schemes.

9. The method according to claim 7, further comprising the step of updating the table when the transmission power to be allocated to each stream is updated.

10. The method according to claim 6, further comprising the step of setting the transmission power to be allocated to each stream by executing calibration for the external device.

**11.** A computer-readable recording medium storing a computer program which causes a computer to, when changing the transmission rate, determine, based on a transmission power to be allocated to each stream and the modulation scheme of each stream, the transmission rate to be changed so as to make a power per bit of each stream at the transmission rate after change remain unchanged or increase.

**12.** A computer program stored in a computer-readable recording medium, the computer program causing a computer to, when changing the transmission rate, determine, based on a transmission power to be allocated to each stream and the modulation scheme of each stream, the transmission rate to be changed so as to make a power per bit of each stream at the transmission rate after change remain unchanged or increase.

F I G. 1

100

105 WIRELESS COMMUNICATION UNIT

106 PARAMETER SETTING UNIT

101 CPU

102 RAM

103 ROM

# F I G. 2

```
                    ( START )
                        │
                        ▼
        ┌───────────────────────────────┐
        │         Calibration           │── S301
        └───────────────────────────────┘
                        │
                        ▼
        ┌───────────────────────────────┐
        │      DETERMINE POWER          │── S302
        │    ALLOCATION TO STREAMS      │
        └───────────────────────────────┘
                        │
                        ▼
        ┌───────────────────────────────┐
        │    CALCULATE POWER PER BIT    │
        │     OF EACH STREAM AT EACH    │── S303
        │      TRANSMISSION RATE        │
        └───────────────────────────────┘
                        │
        ┌──────────────►│
        │               ▼          S304
        │        ◇───────────────────────◇
   NO ◄─┤        ◇    TRANSMISSION       ◇
        │        ◇    RATE CHANGE?       ◇
        │        ◇───────────────────────◇
        │               │ YES ◄──────────────────────┐
        │               ▼                            │
        │   ┌───────────────────────────────┐        │
        │   │  SELECT TRANSMISSION RATE     │        │
        │   │   LOWER THAN CURRENT          │── S305 │
        │   │   TRANSMISSION RATE           │        │
        │   └───────────────────────────────┘        │
        │               │                            │
        │               ▼        S306                │
        │        ◇───────────────────◇               │
        │        ◇  COMPARE POWER     ◇  ANY ONE OF STREAMS
        │        ◇ OF STREAM AT CURRENT◇ EXHIBITS SMALLER POWER
        │        ◇ RATE WITH THAT AT  ◇──────────────┘
        │        ◇    NEW RATE        ◇
        │        ◇───────────────────◇
        │               │  ALL STREAMS EXHIBIT UNCHANGED
        │               │  OR LARGER POWER
        │               ▼
        │   ( DETERMINE NEW TRANSMISSION RATE )── S307
        └───────────────┘
```

# F I G. 3

| TRANSMISSION RATE (Mbps) | STREAM ST1 <P1=0.6> | STREAM ST2 <P2=0.4> |
|---|---|---|
| 39 | 16QAM <0.3> | QPSK <0.4> |
| 52 | 64QAM <0.2> | QPSK <0.4> |
| 58.5 | 16QAM <0.3> | QPSK <0.4> |
| 65 | 64QAM <0.2> | 16QAM <0.2> |
| 78 | 64QAM <0.2> | QPSK <0.4> |
| 97.5 | 64QAM <0.2> | 16QAM <0.2> |

EP 2 066 057 A2

# F I G. 4

| TRANSMISSION RATE (Mbps) | STREAM ST1 <P1=0.5> | STREAM ST2 <P2=0.3> | STREAM ST3 <P3=0.2> |
|---|---|---|---|
| 52 | 16QAM <0.25> | QPSK <0.3> | QPSK <0.2> |
| 65 | 16QAM <0.25> | 16QAM <0.15> | QPSK <0.2> |
| 78 | 64QAM <0.167> | 16QAM <0.15> | QPSK <0.2> |
| 91 | 64QAM <0.167> | 16QAM <0.15> | 16QAM <0.1> |
| 97.5 | 16QAM <0.25> | 16QAM <0.15> | QPSK <0.2> |
| 104 | 64QAM <0.167> | 64QAM <0.1> | 16QAM <0.1> |
| 117 | 64QAM <0.167> | 16QAM <0.15> | QPSK <0.2> |
| 136.5 | 64QAM <0.167> | 16QAM <0.15> | 16QAM <0.1> |
| 156 | 64QAM <0.167> | 64QAM <0.1> | 16QAM <0.1> |

# F I G. 5

```
                    ┌─────────┐
                    │  START  │
                    └────┬────┘
                         │
              ┌──────────▼──────────┐
              │     Calibration     │──── S301
              └──────────┬──────────┘
                         │
              ┌──────────▼──────────┐
              │  DETERMINE POWER    │
              │ ALLOCATION TO STREAMS│──── S302
              └──────────┬──────────┘
                         │
              ┌──────────▼──────────┐
              │  CALCULATE POWER PER BIT │
              │   OF EACH STREAM AT EACH │──── S303
              │    TRANSMISSION RATE     │
              └──────────┬──────────┘
                         │
```

S304

TRANSMISSION RATE CHANGE?

NO

YES

CHECK STREAM HAVING MINIMUM POWER PER BIT AT CURRENT TRANSMISSION RATE ── S401

EXTRACT TRANSMISSION RATE WHICH IS LOWER THAN CURRENT TRANSMISSION RATE AND HAS LARGER POWER THAN THAT OF STREAM STmin SELECTED IN S401 ── S402

S403

COMPARE POWER WITH THAT OF STREAM EXCEPT STmin

ANY ONE OF STREAMS EXHIBITS SMALLER POWER

ALL STREAMS EXHIBIT UNCHANGED OR LARGER POWER

DETERMINE NEW TRANSMISSION RATE ── S307

**EP 2 066 057 A2**

**REFERENCES CITED IN THE DESCRIPTION**

**Patent documents cited in the description**

- JP 2005175542 A